Europäisches Patentamt

European Patent Office

Office européen des brevets

(11) Veröffentlichungsnummer: **0 220 484**
A2

# (12) EUROPÄISCHE PATENTANMELDUNG

(21) Anmeldenummer: 86113014.4

(22) Anmeldetag: 20.09.86

(51) Int. Cl.⁴: **F 01 N 3/02**

(30) Priorität: 26.10.85 DE 3538109

(43) Veröffentlichungstag der Anmeldung: 06.05.87
**Patentblatt 87/19**

(84) Benannte Vertragsstaaten: **AT DE FR GB IT NL SE**

(71) Anmelder: **MAN Technologie GmbH, Dachauer Strasse 667, D-8000 München 50 (DE)**

(72) Erfinder: **Bulang, Wolfgang, Dr. rer. nat., Lavendelweg 6, D-8031 Eichenau (DE)**

(54) **Dieselmotor mit Russfilter.**

(57) Für die Filterung von Partikeln aus Dieselabgasen (10) wird die Kombination eines Filters (13) mit großer Speicherkapazität und einer Drosselklappe (12) in Abgasströmrichtung (15) vor dem Filter liegend, vorgeschlagen. Durch den großvolumigen Filter stellt sich im Betrieb im Mittel ein Gleichgewicht zwischen Abbrand und Abscheidung der Rußpartikel ein. Für längere, ungünstige Betriebsbedingungen des Verbrennungsmotors (11), bei denen die Abgastemperaturen nicht ausreichen, um den Gleichgewichtszustand zwischen Abbrand und Abscheidung aufrechtzuerhalten, wird durch teilweises Schließen der Klappe im Abgasstrang (10) durch erzwungene Erhöhung der Motorleistung eine Anhebung der Abgastemperatur bewirkt, die den Abbrand der im Filter zurückgehaltenen Partikeln fortsetzt. Der Filter kann als Schalldämpfer wirken.

M.A.N. MASCHINENFABRIK AUGSBURG-NÜRNBERG
Aktiengesellschaft
gü/sd

München, 16. Oktober 1985

Dieselmotor mit Rußfilter

Die Erfindung bezieht sich auf einen Dieselmotor, bei dem im Abgasstrang ein Rußfilter und ein Ventil angeordnet sind, wobei mit dem Ventil zur Erhöhung der Abgastemperatur der Abgasstrom drosselbar ist.

Aus der DE-OS 29 30 969 ist ein Dieselmotor dieser Art bekannt, bei dem am Auslaß des Rußfilters eine den Abströmweg der Abgase drosselnde Klappe vorgesehen ist. Der dadurch im Abgassystem angehobene Gegendruck erhöht die Motorbelastung mit der Folge einer Anhebung der Abgastemperatur. Mit einer derartigen Methode soll die Regenerierung des Rußfilters, die bei Vollastbetrieb einer Brennkraftmaschine selbsttätig erfolgt, ergänzt werden. Dazu wird bei der bekannten Ausführung die Klappe in Abhängigkeit vom Differenzdruck der Abgase vor und hinter dem Rußfilter gesteuert. Für die bekannte Ausführung ist daher ein Filter erforderlich, der höhere Drücke aushält, nachdem dieser beim Schließen der Abgasklappe dem höheren Abgasdruck ausgesetzt ist.

7.2332

Der Erfindung liegt die Aufgabe zugrunde, einen Dieselmotor der eingangs genannten Art dahingehend zu verbessern, daß die zugehörigen Filter mit geringerer Druckfestigkeit auslegbar sind.

Die Aufgabe wird erfindungsgemäß durch die im Anspruch 1 gekennzeichneten Merkmale gelöst.

Hiermit wird der Filter nicht in den Druckbereich einbezogen, so daß die Gefahr, daß der Filter durch überhöhten Druck zerstört wird, ausgeschlossen wird. Dieses hat den weiteren Vorteil, daß aufgrund des geringeren Volumens der Druckaufbau beim Drosseln des Ventils und damit die Einleitung des Regenerierprozesses rascher erfolgen kann, als beim Stand der Technik.

Das Ventil wird vorzugsweise in Abhängigkeit von Motoreigenschaften geregelt, hierzu zählen die Drehzahl, das Drehmoment, die Abgastemperatur und der Abgasgegendruck. Der Durchlaßquerschnitt vom Ventil wird dabei je nach Betriebszustand unterschiedlich eingestellt.

Wenn der Abgasgegendruck eine vorbestimmte Höhe erreicht hat und der Motor nicht auf Vollastleistung übergeht, wird das Ventil betätigt und der Abgasstrom soweit gedrosselt, daß die Abgastemperaturen auf etwa 450°C ansteigen und der Restsauerstoffanteil im Abgas mindestens noch 5% beträgt. Mit diesen Werten läßt sich ein katalytisch wirkender Filter durch Rußabbrand regenerieren, während anderseits die Motorbelastung so niedrig wie möglich gehalten wird.

7.2332
16.10.1985

Die Häufigkeit des Drosseleinsatzes für einen Regeneriervorgang kann durch die Verwendung eines Filters mit großem Speichervermögen reduziert werden. Es hat sich herausgestellt, daß bei genügend großem Speichervermögen des Filters und bei auf die Oxidation von Ruß wirkender katalytischer Beschichtung sich nämlich ein kontinuierlicher Abbrand der Rußpartikel einstellt, bei dem sich im Mittel Abbrand und Abscheidung im Gleichgewicht befinden. So braucht eine Anhebung der Abgastemperatur durch Drosseln des Abgasstromes nur bei ungünstigen Betriebsbedingungen mit überwiegenden Fahrzuständen mit Teillast eingesetzt werden. Hierzu sollte das Speichervolumen des Filters mindestens so groß sein, wie das Hubvolumen des Verbrennungsmotors, vorzugsweise doppelt so groß sein.

Ein großvolumiger Filter hat ferner den Vorteil, daß er gleichzeitig wenigstens zum Teil die Funktion der Schalldämpfung übernimmt. Zusammen mit vorgeschalteten und/oder nachgeschalteten Kammern und gegebenenfalls Resonatoren läßt sich der Filter in einem Schalldämpfer wirksam integrieren.

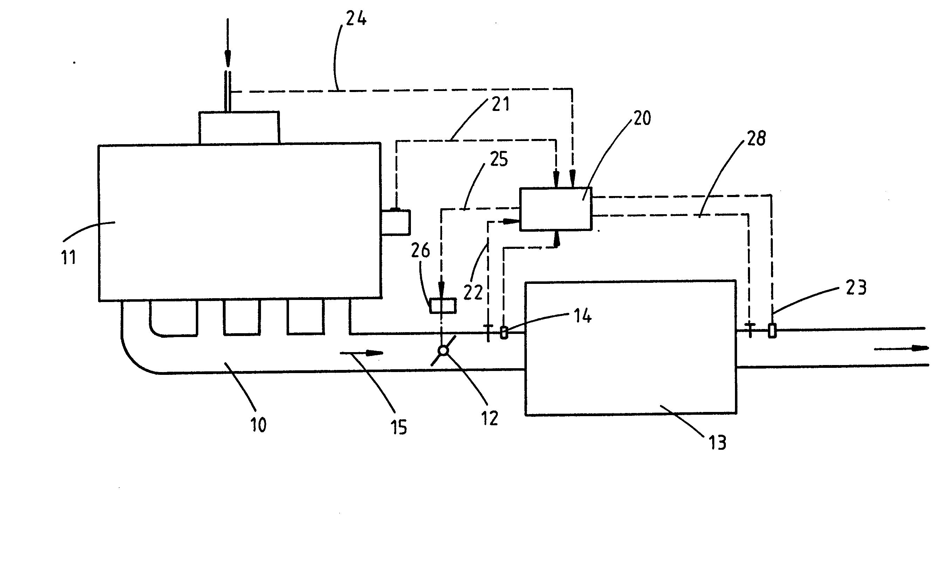

In der Zeichnung ist ein Ausführungsbeispiel der Erfindung schematisch dargestellt.

Im Abgasstrang 10 eines Verbrennungsmotors 11 ist in Abströmrichtung der Reihe nach ein als Drosselklappe ausgebildetes Ventil 12 und ein Rußfilter 13 angeordnet. Der Filter 13 ist ein aus Drahtgewebe, Faserwickel oder Schaumkeramik bestehender Tiefenfilter, der katalytisch beschichtet ist und ein Speichervolumen hat, das mindestens so groß wie das Hubvolumen des Verbrennungsmotors 11. Bei einem derartigen Filter reichen Abgastemperaturen von ca. 400°C aus, um einen kontinierlichen Ab-

7.2332
16.10.1985

0220484

brand der im Filter abgeschiedenen Partikel zu ermöglichen. Über die Zeit des Betriebes des Verbrennungsmotors 11 wird jedoch diese Temperatur nicht immer erreicht. Jedoch stellt sich aufgrund des großen Speichervermögens im Mittel ein Gleichgewicht zwischen Abscheidung und Abbrand der Rußpartikel ein.

Bei Betrieb des Verbrennungsmotors 11, insbesondere im Einsatz in Fahrzeugen, stellen sich nicht selten ungünstige Betriebsbedingungen ein, bei denen die Abgastemperaturen so niedrig werden, daß die Reaktionsgeschwindigkeit für die Partikeloxidation nicht mehr ausreicht, um den Gleichgewichtszustand zwischen Abbrand und Abscheidung aufrechtzuerhalten. Für diese Fälle ist im Abgasstrang 10 vor dem Filter 13 das Ventil 12 vorgesehen. Wenn in solchen Betriebszuständen der Abgasgegendruck 14 soweit angestiegen ist, daß eine Beeinträchtigung der Motorleistung oder des Kraftstoffverbrauchs eintritt, wird das Ventil 12 betätigt, um durch Drosseln des Abgasstromes 15 eine Anhebung der Abgastemperatur zu bewirken. Dadurch wird der Abbrand des Rußes im Filter 13 wieder beschleunigt, denn mit steigender Abgastemperatur beschleunigt sich der Abbrand exponentiell, wobei die Exothermie des Abbrandes eine weitere Temperaturerhöhung mit weiterer Beschleunigung des Abbrandes bewirkt.

Durch das Ventil 12 wird der Druck im Abgasstrang 10 vor dem Filter 13 erhöht, jedoch nicht im Filter 13, was den Vorteil hat, daß der Filter 13 nicht für hohe Druckbelastungen ausgelegt werden muß.

7.2332
16.10.1985

Für die Steuerung des Ventils 12 ist ein Regler 20 vorgesehen, der Daten vom Betriebszustand des Verbrennungsmotorsystemes erhält, wie die Drehzahl und das Drehmoment 21 des Verbrennungsmotors 11, die Abgastemperatur 22 sowie den Abgasgegendruck 14 oder den Druckverlust 14, 23 am Filter 13 und die Kraftstoffeinspritzmenge 24. In Abhängigkeit der Werte dieser Daten 21 bis 24 gibt der Regler 20 ein Steuersignal 25 an ein Stellglied 26 ab, mit dem das Ventil 12 innerhalb vorgegebener Schließstellungsgrenzen stufenlos veränderbar ist. Die Regelung des Ventils 12 kann dabei nach verschiedenen Kriterien ablaufen.

Nach einem Kriterium wird der gezielte Regeneriervorgang durch Betätigung des Ventils 12 eingeleitet, wenn der Abgasgegendruck 14 einen vorbestimmten Wert überschreitet. Das Ventil 12 wird dann in Abhängigkeit der Temperatur 22 im Abgas und der Kraftstoffeinspritzmenge 24 soweit gedrosselt, daß die durchströmenden Abgase 15 eine Temperatur von 450°C erreichen und noch einen Mindestsauerstoffgehalt von 5% enthalten. Durch Überwachen des Druckverlustes 14, 23 am Filter 13 und der Abgastemperatur 22 wird der Grad des Abbrandes überwacht und das Ventil 12 entsprechend geregelt. Es kann eine Temperaturüberwachung 28 am Ausgang des Filters 13 vorgesehen werden, mit dem die Temperatur im Filter 13 überwacht wird. Steigt diese Temperatur 28 über 450°C, so wird das Ventil 12 soweit geöffnet, daß durch Erhöhung des Abgasmassenstromes eine Überhitzung im Filter 13 und damit eine Zerstörung oder Beschädigung des Filters vermieden wird. Das Ventil 12 wird somit während eines gezielten Regeneriervorganges ständig geregelt.

7.2332
16.1o.1985

0220484

Eine andere Regelungsmethode ist, den Drosselvorgang während Teillast- oder Leerlaufbetrieb des Motors einzuleiten, um unter Ausnutzung der Wärmekapazität des Filter- und Abgassystemes die Abgastemperatur im Mittel nur soweit anzuheben, daß ein kontrollierter Abbrand der gesamten Partikel stattfindet.

Im Fahrbetrieb von Linienbussen kann die Regelung des Ventiles 12 im Takt des Fahrzyklus geschehen, indem das Ventil 12 in den Beschleunigungsphasen offen ist und bei konstanter Fahrt mit geringer Leistung und im Leerlauf beim Stillstand an den Haltestellen entsprechend den Betriebsbedingungen teilweise geschlossen wird.

Aufgrund des großen Filtervolumens mit der Fähigkeit zur Schallabsorption kann der Filter bei entsprechender Unterteilung in Vorkammer, Filterkammer, Nachkammer als Schalldämpfer wirken, so daß es den üblichen Schalldämpfer ersetzen kann.

7.2332
16.10.1985

0220484

M.A.N. MASCHINENFABRIK AUGSBURG-NÜRNBERG
Aktiengesellschaft
gü/sd

München, 16. Oktober 1985

P a t e n t a n s p r ü c h e

1. Dieselmotor, bei dem im Abgasstrang ein Rußfilter und ein Ventil angeordnet ist, wobei zur
Erhöhung der Abgastemperatur der Abgasstrom mit
dem Ventil drosselbar ist, dadurch gekennzeichnet,
daß das Ventil (12) in Abgasströmungsrichtung
vor dem Filter (13) angeordnet ist.

2. Motor nach Anspruch 1, dadurch gekennzeichnet, daß
das Ventil (12) in Abhängigkeit von Motor- bzw.
Betriebseigenschaften des Verbrennungsmotorsystemes
geregelt wird.

3. Motor nach Anspruch 2, dadurch gekennzeichnet,
daß das Ventil (12) in Abhängigkeit der Drehzahl
und des Drehmomentes (21) des Verbrennungsmotors (11) sowie der Abgastemperatur (22) und dem
Abgasgegendruck (14) geregelt wird.

7.2332

- 2 -

0220484

4. Motor nach einem der vorhergehenden Ansprüche, dadurch gekennzeichnet, daß das Ventil (12) für Regenerierphasen soweit drosselbar ist, daß die Abgastemperatur (14) auf etwa 450°C anhebbar ist und daß der Restsauerstoffanteil im Abgas mindestens 5% beträgt.

5. Motor nach einem der vorhergehenden Ansprüche, dadurch gekennzeichnet, daß das Ventil eine Drosselklappe (12) ist.

6. Motor nach einem der vorhergehenden Ansprüche, dadurch gekennzeichnet, daß zur Reduzierung der notwendigen Drosselhäufigkeit des Ventiles (12) ein Filter (13) mit großer Speicherkapazität vorgesehen ist.

7. Motor nach Anspruch 6, dadurch gekennzeichnet, daß das Speichervolumen des Filters (13) mindestens so groß ist wie das Hubvolumen des Dieselmotors, vorzugsweise etwa doppelt so groß ist.

8. Motor nach Anspruch 7, dadurch gekennzeichnet, daß der Filter (13) aufgrund seines Volumens zumindest einen Teil eines Schalldämpfers bildet.

7.2332
16.10.1985

1/1

0220484